# EUROPEAN PATENT APPLICATION

(11) **EP 4 765 701 A1**
(43) Date of publication of application: **24.06.2026**
(21) Application number: 24865842.9
(22) Date of filing: 11.09.2024
(51) Int. Cl.: H04L 1/16, H04W 28/04, H04W 84/12, H04L 69/14

(54) **APPARATUS AND METHOD FOR FAST ERROR REPORTING IN WIRELESS LAN SYSTEM**

(30) Priority: 11.09.2023 KR 20230120712
(71) Applicant: Hyundai Motor Company, Seoul 06797 (KR); Kia Corporation, Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 22003 (KR); AHN, Woo Jin, Anyang-si, Gyeonggi-do 14038 (KR); MOON, Ju Seong, Osan-si, Gyeonggi-do 18101 (KR)
(74) Representative: Isarpatent
(86) International application number: PCT/KR2024/013811
(87) International publication number: WO 2025/058403

(57) **Abstract**

For rapid error report in a wireless LAN system, a method for operating a station (STA) in the wireless LAN system may comprise transmitting a plurality of frames in a first link, receiving an error report of a frame in which an error is detected among the plurality of frames in a second link, and transmitting a retransmission frame including the frame in which the error is detected based on the error report. Each of the plurality of frames includes a delimiter, and the delimiter includes information for distinguishing each of the plurality of frames.

## Description

### Technical Field

The present invention relates to a wireless local area network (WLAN) system, and more particularly, to an apparatus and method for fast error reporting in a wireless local area network (LAN) system.

### Background Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

As applications requiring higher throughput and applications requiring real-time transmission occur, an expanded frequency bandwidth and/or an efficient retransmitting operation may be supported in a WLAN. In addition, an operation of simultaneously using multiple links or links may be supported.

### Disclosure

### Technical Problem

The present disclosure provides a method and apparatus for detecting and reporting an error in a frame received by an access point (AP) in a wireless LAN system.

The present disclosure provides a method and apparatus for enabling a station (STA) to quickly recover a frame in which an error is detected in a wireless LAN system.

The present disclosure provides a method and apparatus for enabling an AP and an STA using simultaneous transmit receive (STR) link pairs to report and recover an error in a frame using a plurality of links in a wireless LAN system.

The present disclosure provides a method and apparatus for identifying a frame for recovery from an error frame in a wireless LAN system.

The present disclosure provides a method and apparatus for exchanging information for identifying a frame in a wireless LAN system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

According to an embodiment of the present disclosure, a method for operating a station (STA) in the wireless LAN system may comprise transmitting a plurality of frames in a first link, receiving an error report of a frame in which an error is detected among the plurality of frames in a second link, and transmitting a retransmission frame including the frame in which the error is detected based on the error report. Each of the plurality of frames includes a delimiter, and the delimiter includes information for distinguishing each of the plurality of frames.

A method for operating an access point (AP) in a wireless LAN system may comprise receiving a plurality of frames in a first link, detecting an error in at least one of the plurality of frames, transmitting an error report based on the frame in which the error is detected, and receiving a retransmission frame transmitted based on the error report. Each of the plurality of frames includes a delimiter, and the delimiter includes information for distinguishing each of the plurality of frames.

A station (STA) in a wireless LAN system may comprise a transceiver and a processor connected to the transceiver. The processor may be configured to transmit a plurality of frames in a first link, receive an error report of a frame in which an error is detected among the plurality of frames in a second link, and transmit a retransmission frame including the frame in which the error is detected based on the error report. Each of the plurality of frames includes a delimiter, and the delimiter includes information for distinguishing each of the plurality of frames.

An access point (AP) in a wireless LAN system may comprise a transceiver and a processor connected to the transceiver. The processor may be configured to receive a plurality of frames in a first link, detect an error in at least one of the plurality of frames, transmit an error report based on the frame in which the error is detected, and receive a retransmission frame transmitted based on the error report. Each of the plurality of frames includes a delimiter, and the delimiter includes information for distinguishing each of the plurality of frames.

### Advantageous Effects

According to the present disclosure, it is possible to transmit a feedback frame including time information capable of identifying a frame in which an error is detected in a wireless LAN system.

According to the present disclosure, it is possible to transmit an MPDU including information about a previous MPDU and a next MPDU.

According to the present disclosure, an AP can identify a frame in which an error is detected and transmit a feedback frame.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

FIG. 1 is a block diagram illustrating a first embodiment of communication nodes constituting a wireless LAN system.
FIG. 2 illustrates a first embodiment of a negotiation procedure for multi-link operation in a wireless LAN system.
FIG. 3 illustrates a first embodiment of a fast error feedback method.
FIG. 4a illustrates a second embodiment of a fast error feedback method.
FIG. 4b illustrates a third embodiment of a fast error feedback method.
FIG. 5 illustrates a fourth embodiment of a fast error feedback method.
FIG. 6 illustrates a fifth embodiment of a fast error feedback method.
FIG. 7 illustrates a flowchart of an error recovery procedure according to an embodiment of the present disclosure.
FIG. 8 illustrates a flowchart of an error recovery procedure according to an embodiment of the present disclosure.

### Mode for Invention

The present disclosure may have various modifications and embodiments, and specific embodiments are illustrated in the drawings and described in detail in the detailed description. However, this is not intended to limit the present disclosure to specific embodiments, but should be understood to include all modifications, equivalents, or substitutes included in the spirit and technical scope of the present disclosure.

The terms first, second, etc. may be used to describe various components, but the components should not be limited by the terms. The terms are only used for the purpose of distinguishing one component from another. For example, without departing from the scope of the present disclosure, the first component may be referred to as the second component, and similarly, the second component may also be referred to as the first component. The term and/or includes a combination of a plurality of related described items or any item among a plurality of related described items.

When it is said that a component is 'coupled with/to' or 'connected to' another component, it should be understood that the one component is connected to the other component directly or through any other component in between. On the other hand, when it is said that a component is 'directly connected to' or 'directly coupled to' another component, it should be understood that there is no other component between the components.

The terminology used in the present disclosure is only used to describe specific embodiments and is not intended to limit the present disclosure. The singular expression includes the plural expression unless the context clearly indicates otherwise. In the present disclosure, terms such as "include" or "have" are intended to specify the presence of a feature, number, step, operation, component, part or combination thereof described in the specification, but should be understood not to exclude in advance the possibility of the presence or addition of one or more other features, numbers, steps, operations, components, parts or combinations thereof.

Unless otherwise defined, all terms used herein, including technical or scientific terms, have the same meaning as commonly understood by one of ordinary skill in the art to which this invention pertains. Terms defined in commonly used dictionaries should be interpreted as having a meaning consistent with their meaning in the context of the relevant technology, and will not be interpreted in an idealized or overly formal sense unless explicitly defined herein.

Hereinafter, with reference to the attached drawings, various exemplary embodiments of the present invention will be described in more detail. In order to facilitate an overall understanding in describing the present invention, identical reference numerals are used for identical components in the drawings, and redundant descriptions of identical components are omitted.

Below, a wireless communication system to which embodiments of the present invention are applied will be described. The wireless communication system to which embodiments of the present invention are applied is not limited to the description below, and embodiments of the present invention can be applied to various wireless communication systems. The wireless communication system may be referred to as a "wireless communication network."

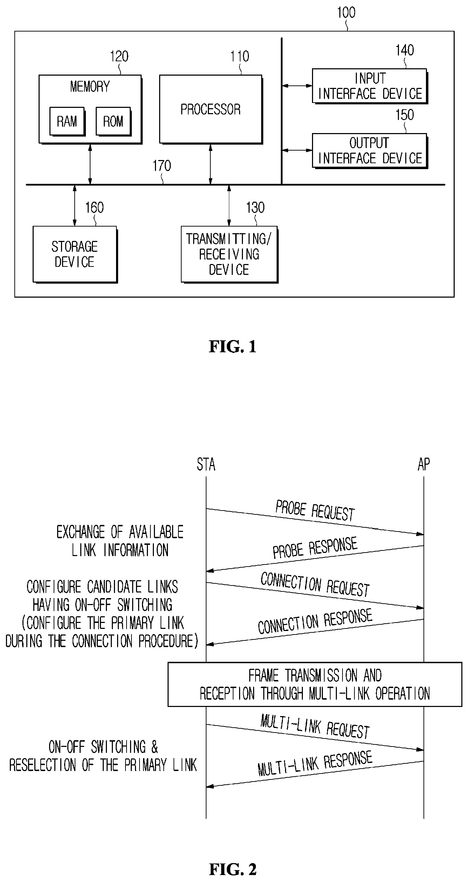

FIG. 1 illustrates a block diagram of a communication node in a WLAN system.

Referring to FIG. 1, a communication node 100 may be an access point (AP), a station (STA), an AP multi-link device (MLD), or a non-AP MLD. A STA may be a non-AP STA. An operating channel width supported by an AP may be 20 MHz, 80 MHz, or 160 MHz. An operating channel width supported by a STA may be 20 MHz or 80 MHz.

The communication node 100 may include at least one processor 110, a memory 120, and at least one transmitting/receiving device 130 that is connected to a network and performs communication. The transmitting/receiving device 130 may also be referred to as a transceiver, a radio frequency (RF) unit, or a RF module. In addition, the communication node 100 may further include an input interface device 140, an output interface device 150, and a storage device 160. Components included in the communication node 100 may be connected by a bus 170 and perform communication between them.

However, each component included in the communication node 100 may be connected not by the common bus 170 but by an individual interface or individual bus around the processor 110. For example, the processor 110 may be connected to at least one of the memory 120, the transmitting/receiving device 130, the input interface device 140, the output interface device 150, and the storage device 160 through a dedicated interface.

The processor 110 may execute a program command stored in at least one of the memory 120 and the storage device 160. The processor 110 may be a central processing unit (CPU), a graphics processing unit (GPU), or a dedicated processor that performs methods according to the embodiments of the present invention. The memory 120 and the storage device 160 may each be formed as at least one of a volatile storage medium and a non-volatile storage medium. For example, the memory 120 may be formed as at least one of a read only memory (ROM) and a random access memory (RAM).

FIG. 2 is a flowchart illustrating a first embodiment of a negotiation procedure for multi-link operation in a wireless LAN system.

Referring to FIG. 2, in an infrastructure basic service set (BSS), an access procedure between a station (STA) and an access point (AP) may include a probe step for detecting an access point, an authentication step between the station and the detected access point, and an association step between the station and the authenticated access point.

In the probe step, the station may detect one or more access points using a passive scanning method or an active scanning method. When the passive scanning method is used, the station may detect one or more access points by overhearing beacon frames transmitted by the one or more access points. When the active scanning method is used, the station may transmit a probe request frame and may detect one or more access points by receiving probe response frames, which are responses to the probe request frame, from the one or more access points.

When one or more access points are detected, the station may perform an authentication step with the detected access point(s). In this case, the station may perform the authentication step with a plurality of access points. An authentication algorithm according to the IEEE 802.11 standard may be classified into, for example, an open system algorithm in which two authentication frames are exchanged, and a shared key algorithm in which four authentication frames are exchanged.

The station may transmit an authentication request frame based on an authentication algorithm according to the IEEE 802.11 standard, and may complete authentication with the access point by receiving an authentication response frame, which is a response to the authentication request frame, from the access point.

When authentication with the access point is completed, the station may perform an association step with the access point. In this case, the station may select one access point among the access point(s) with which the authentication step has been performed, and may perform the association step with the selected access point. That is, the station may transmit an association request frame to the selected access point and may complete association with the selected access point by receiving an association response frame, which is a response to the association request frame, from the selected access point.

Meanwhile, multi-link operation may be supported in a wireless LAN system. A multi-link device (MLD) may include one or more STAs associated with the MLD. The MLD may be a logical entity. The MLD may be classified into an AP MLD and a non-AP MLD. Each STA associated with the AP MLD may be an AP, and each STA associated with the non-AP MLD may be a non-AP STA.

In order to configure multi-link operation, a multi-link discovery procedure and a multi-link setup procedure may be performed. The multi-link discovery procedure may be performed during the probe step between the station and the access point. In this case, a multi-link information element (ML IE) may be included in a beacon frame, a probe request frame, and/or a probe response frame.

For example, in order to perform multi-link operation, during the probe step, information indicating whether multi-link operation is available and information on available links may be exchanged between an access point (e.g., an AP associated with an MLD) and a station (e.g., a non-AP STA associated with an MLD).

In a negotiation procedure for multi-link operation (e.g., a multi-link setup procedure), the access point and/or the station may transmit information on links to be used for multi-link operation. The negotiation procedure for multi-link operation may be performed during the access procedure between the station and the access point (e.g., during the association step), and information element(s) required for multi-link operation may be set or modified by an action frame in the negotiation procedure.

Further, during the access procedure between the station and the access point (e.g., during the association step), available link(s) of the access point may be configured, and an identifier (ID) may be assigned to each link. Thereafter, in a negotiation procedure and/or a modification procedure for multi-link operation, information indicating whether each link is activated may be transmitted, and the information may be represented using the link ID.

Information indicating whether multi-link operation is available may be transmitted and received during an exchange procedure of a capability information element (e.g., an extremely high throughput (EHT) capability information element) between the station and the access point. The capability information element may include information on supporting bands, information on supported links (e.g., IDs and/or the number of supported links), and information on links capable of simultaneous transmit and receive (STR) operation (e.g., band information of the links and interval information of the links). The capability information element may further include information individually indicating links capable of STR operation.

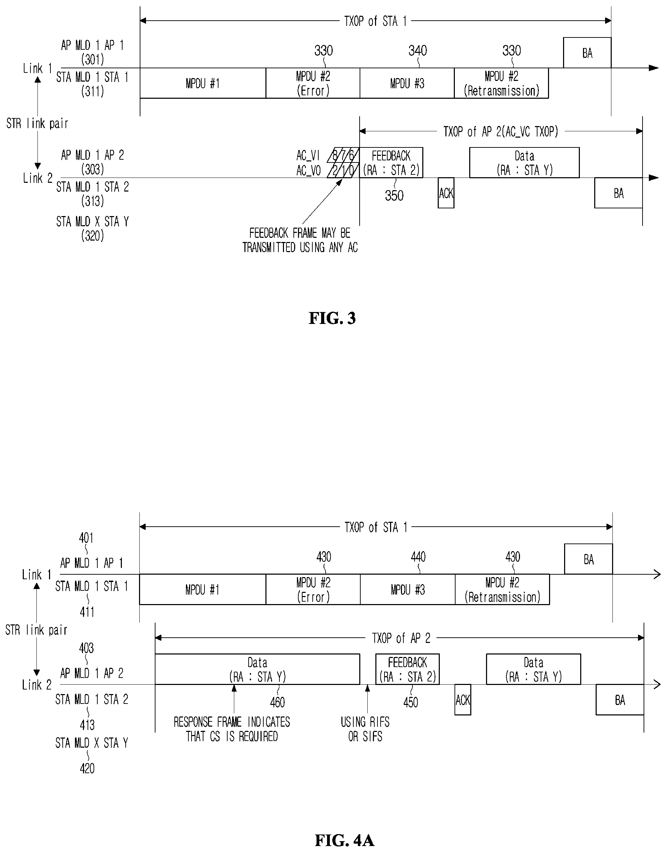

FIG. 3 illustrates a first embodiment of a fast error feedback method.

Referring to FIG. 3, AP MLD 1 and STA MLD 1 may operate in a wireless LAN network. An AP in which AP MLD 1 operates in a first link is AP 1 301, and an AP in which AP MLD 1 operates in a second link is AP 2 303. That is, AP 1 301 and AP 2 303 may be affiliated with AP MLD 1. Similarly, an STA in which STA MLD 1 operates in the first link may be STA 1 311, and an STA in which STA MLD 1 operates in the second link may be STA 2 313. That is, STA 1 311 and STA 2 313 may be affiliated with STA MLD 1. In the second link, STA Y 320 affiliated with STA MLD X may operate. X and Y may be natural numbers. For example, STA MLD X may or may not be STA MLD 1. STA Y 320 may or may not be STA 2 313. The first link and the second link of STA MLD 1 may be links capable of simultaneous transmit receive (STR link pair). Alternatively, the first link and the second link of STA MLD 1 may be links incapable of simultaneous transmit receive (NSTR link pair), but may be a conditional STR or conditional NSTR link pair that can be received when STA MLD 1 receives a frame transmitted by the AP with strong transmit power or/and low modulation and coding scheme (MCS) in another link while transmitting in one link.

STA 1 311 may acquire a transmit opportunity (TXOP) in the first link. TXOP acquisition is achieved when the EDCAF of STA 1 311 determines transmission by a channel access procedure (e.g., EDCA backoff operation). STA 1 311 may transmit frames (e.g., PPDU (physical layer protocol data unit), MPDU (MAC layer protocol data unit), A-MPDU (aggregated MPDU)) within the TXOP. STA 1 311 may transmit A-MPDU to AP 1 301, and the A-MPDU includes a plurality of MPDUs. A delimiter capable of distinguishing MPDUs may be included between MPDUs. The delimiter may be composed of 32 bits and may include at least one of an MPDU length indicator (e.g., 14 bits), a CRC (Cyclic Redundancy Check) (e.g., 8 bits), and a delimiter signature (e.g., 8 bits). When AP 1 301 receives MPDUs transmitted by STA 1 311, MPDU #1, MPDU #2 330, and MPDU #3 340 may be received sequentially. Among the MPDUs received by AP 1 301, MPDU #2 330 may have an error (e.g., cannot be decoded, FCS (Frame Check Sequence) error) and may not be properly received. Due to MPDU #2 330 not being properly received, AP 1 301 may not transmit data in ae queue to an upper layer. Alternatively, MPDU #2 330 may be a frame that needs to be transmitted to the upper layer urgently. Since MPDU #2 330 was not properly received, MPDU #2 330 is not transmitted to the upper layer. In order to transmit a feedback frame 350 for recovering MPDU #2 330, AP 2 303 may perform a channel access procedure (e.g., an EDCA backoff operation) in the second link. The channel access procedure may be newly started for AP 2 303 to transmit the feedback frame 350 for recovering MPDU #2 330. Alternatively, instead of newly starting the channel access procedure, the channel access procedure previously performed by AP 2 303 may continue to be performed. The channel access procedure of AP 2 303 may succeed (e.g., the EDCA backoff counter reaches 0). AP 2 303 transmits to STA 2 313 a feedback frame 350 indicating that MPDU #2 330 is not properly received. The channel access procedure of AP 2 303 may be performed for each AC (access category). The feedback frame 350 may be transmitted by the channel access procedure of any AC (e.g., by the EDCAF of the AC whose channel access procedure is completed the fastest). Alternatively, if there is an EDCAF of any type of AC that AP 2 303 successfully performs the channel access procedure (e.g., the EDCA backoff counter reaches 0) and remains at 0, the feedback frame 350 may be transmitted immediately.

Alternatively, the feedback frame 350 may be transmitted by a channel access procedure related to the AC of the MPDU of the frame that STA 1 311 of the first link transmits to AP 1 301 (e.g., by AC_VO EDCAF of the second link when the AC of the MPDU that STA 1 311 transmits to AP 1 301 is AC_VO). For example, the AC-specific channel access procedure of AP 2 303 may end AC_VO before AC_VI and other ACs (e.g., AC_BE and AC_BK). AP 2 303 may obtain AC_VO TXOP in the second link, and AP 2 303 transmits to STA 2 313 the feedback frame 350 indicating that MPDU #2 330 was not properly received. In the remaining AC_VO TXOP of AP 2 303, AP 2 303 may transmit a data frame to STA Y 320.

A frame error in the first link may be detected while a frame to be transmitted is generated in a transmission queue of the second link and a channel access procedure is being performed. A frame of an AC to be transmitted in the second link may be generated and a channel access procedure (e.g., a backoff procedure) may be performed, and an error may be detected in the MPDU received in the first link before the backoff counter becomes 0. The AC of the MPDU in which an error occurred in the first link may be a different AC from or the same AC as the AC for which a backoff is being performed for transmission in the second link. If the channel access procedure is successful in the second link (e.g., if the backoff is successful and the counter becomes 0), a TXOP of a time length including the feedback transmission time for the MPDU generated in the first link is set. That is, a duration included in an MAC header of the feedback frame 350 may be set to a time including a data frame transmission time of the AC to be transmitted. The receiving STA of the feedback frame 350 and the data frame can be different. The feedback frame 350 may be transmitted first and then the data frame may be transmitted. Alternatively, the feedback frame 350 and the data frame may be transmitted together using a downlink OFDMA (Orthogonal Frequency Division Multiple Access) method that simultaneously transmits them using different subchannels. The feedback may be restricted to be transmitted only when the priority of the AC of the data to be transmitted in the second link to perform a channel access procedure is lower than the AC of the MPDU that failed to be transmitted in the first link. Alternatively, the feedback of the MPDU that failed to be transmitted in the first link may be assumed to be higher than any AC. Accordingly, if channel access for data transmission is successful in the second link regardless of the AC, the feedback frame 350 may be transmitted together with the data transmission.

STA MLD 1 may receive the feedback frame 350 of AP MLD 1, and STA MLD 1 may know that MPDU #2 330 is not properly transmitted in the frame transmitted from STA 1 311 of the first link to AP 1 301. STA MLD 1 may or may not transmit a response frame (e.g., an ACK frame) to the feedback frame 350 of AP MLD 1. STA MLD 1 may retransmit MPDU #2 330 in a frame that is already being transmitted. For example, MPDU #2 330 may be retransmitted after MPDU #3 340, which is the MPDU after MPDU #2 330. Alternatively, STA MLD 1 may transmit MPDU #2 330 to AP 1 301 through a separate frame. AP MLD 1 may transmit the data in the queue to the upper layer when normally receiving the retransmitted MPDU #2 330. If an error has occurred in the retransmitted MPDU #2 330 again, the retransmission operation of the above-described MPDU #2 330 may be performed again. As another method for enabling STA MLD 1 to perform retransmission, STA 1 311 of STA MLD 1 may retransmit the frame (e.g., MPDU #3 340) transmitted after MPDU #2 330 together, instead of retransmitting only MPDU #2 330. That is, STA 1 311 may transmit the frame again starting from MPDU #2 330.

In the above embodiment, when STA MLD 1 has a conditional NSTR link pair or a conditional STR link pair (e.g., when the first link and the second link are a conditional NSTR link pair), while STA MLD 1 transmits a frame to AP MLD 1 in the first link, AP MLD 1 transmits a frame to STA MLD 1 with strong transmit power and/or low MCS in the second link. In the conditional NSTR link pair or conditional STR link pair, while the frame is transmitted in one link, the STA MLD may receive a frame that satisfies a specific condition (e.g.) in another link. For example, the STA MLD may receive a frame that satisfies an MCS lower than or equal to a certain value and a receive power higher than or equal to a certain value in the first link in the second link. The feedback frame 350 of the above embodiment may be a frame in various forms. For example, the feedback frame 350 may be one of a control frame including a BlockAck frame, an action frame, and QoS frames having a control field (e.g., an HT Control field). The feedback frame 350 includes at least one of a Sequence Number (SN) and TID of the MPDU or/and MSDU or information capable of identifying the MPDU or MSDU (e.g., time information capable of identifying the MPDU or MSDU, and the MPDU identified by the MPDU order within the A-MPDU).

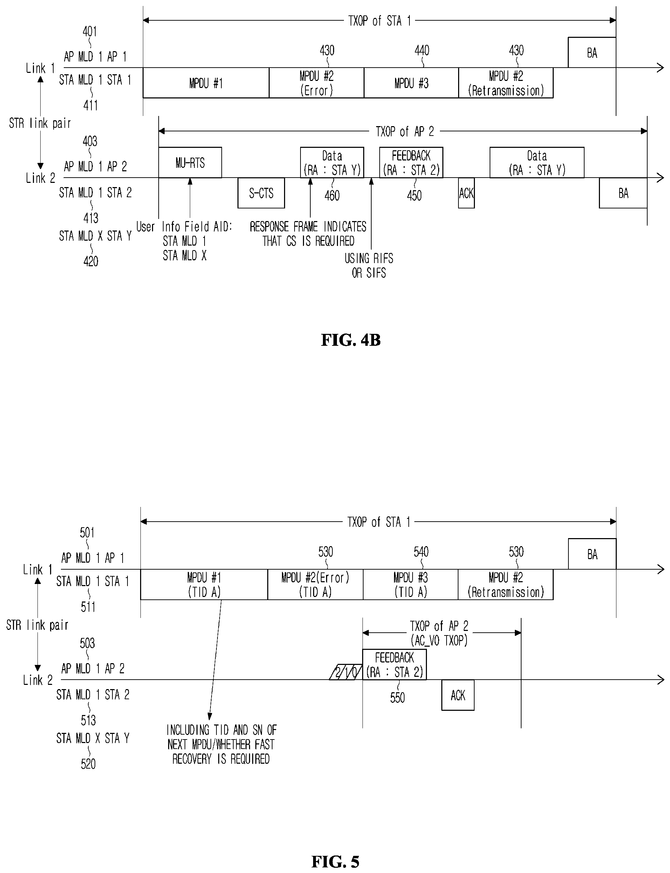

FIG. 4a illustrates a second embodiment of a fast error feedback method. FIG. 4b illustrates a third embodiment of a fast error feedback method.

Referring to FIGS. 4a and 4b, AP MLD 1 and STA MLD 1 may operate in a wireless LAN network. An AP in which AP MLD 1 operates in a first link is AP 1 401, and an AP in which AP MLD 1 operates in a second link is AP 2 403. That is, AP 1 401 and AP 2 403 may be affiliated with AP MLD 1. Similarly, an STA in which STA MLD 1 operates in the first link may be STA 1 411, and an STA in which STA MLD 1 operates in the second link may be STA 2 413. That is, STA 1 411 and STA 2 413 may be affiliated with STA MLD 1. In the second link, STA Y 420 affiliated with STA MLD X may operate. X may be a natural number. Y may be a natural number. For example, STA MLD X may or may not be STA MLD 1. STA Y 420 may or may not be STA 2 413. The first link and the second link of STA MLD 1 may be links capable of simultaneous transmit receive (STR link pair). Alternatively, the first link and the second link of STA MLD 1 may be links incapable of simultaneous transmit receive (NSTR link pair), but may be a conditional STR or a conditional NSTR link pair that may be received when STA MLD 1 receives a frame transmitted by an AP with strong transmit power or/and low MCS (Modulation and Coding Scheme) in another link while transmitting in one link.

STA 1 411 may acquire a TXOP in the first link. TXOP acquisition is achieved when the EDCAF of STA 1 411 determines transmission by a channel access procedure (e.g., EDCA backoff operation). STA 1 411 may transmit frames (e.g., PPDU (physical layer protocol data unit), MPDU (MAC layer protocol data unit), A-MPDU (aggregated MPDU)) within the TXOP. STA 1 411 may transmit an A-MPDU to AP 1 401, and the A-MPDU includes a plurality of MPDUs. A delimiter capable of distinguishing MPDUs may be included between the MPDUs. The delimiter may be composed of 32 bits and may include at least one of an MPDU length indicator (e.g., 14 bits), a CRC (Cyclic Redundancy Check) (e.g., 8 bits), and a delimiter signature (e.g., 8 bits). When AP 1 401 receives MPDUs transmitted by STA 1 411, MPDU #1, MPDU #2 430, and MPDU #3 440 may be received sequentially. Among the MPDUs received by AP 1 401, MPDU #2 430 may have an error (e.g., cannot be decoded, FCS error) and may not be properly received. Due to MPDU #2 430 not being properly received, AP 1 401 may not transmit data in the queue to the upper layer. Alternatively, MPDU #2 430 may be a frame that must be urgently transmitted to the upper layer. Because MPDU #2 430 was not properly received, MPDU #2 430 is not transmitted to the upper layer.

Referring to FIG. 4a, AP MLD 1 is transmitting a frame to STA Y 420 in the second link while receiving a frame from STA 1 411 in the first link. That is, AP MLD 1 is already transmitting a frame within the TXOP acquired by AP MLD 1 in the second link. AP 2 403 of AP MLD 1 may stop transmission of a frame 460 transmitted to STA Y 420 in order to transmit to STA 2 413 a feedback frame 450 indicating that MPDU #2 430 was not properly received. The frame 460 transmitted to STA Y 420 may include an indicator (e.g., CS required) indicating that STA Y 420 must perform channel sensing (CS) before transmitting a response frame (e.g., BlockAck frame) to AP 2 403 and transmit the response frame only when the channel is idle for a certain period of time as a result of channel sensing. The frame 460 transmitted to STA Y 420 may include a Long or Short channel sensing time indicator. The Long or Short channel sensing time indicator may be included only when a channel sensing required indicator is included. The Long channel sensing indicator indicates that channel sensing is to be performed for a PIFS time, and the Short channel sensing indicator indicates that channel sensing is to be performed for a SIFS time. Alternatively, when the channel sensing time indicator is set, it may be interpreted as the Long channel sensing indicator, and when the channel sensing time indicator is not set, it may be interpreted as the Short channel sensing indicator. Alternatively, when the channel sensing required indicator is included, the Long channel sensing indicator that indicates channel sensing during the PIFS time rather than the SIFS time may be considered as being included without including a channel time sensing indicator. The channel sensing required indicator (CS required) may be included in an MAC header. When the feedback frame 450 is transmitted after the RIFS time shorter than the SIFS time, the channel sensing time indicator may not be included, and when the channel sensing required indicator is included, the STA that has received it transmits a response frame only when the channel is idle after performing channel sensing during the SIFS time. The transmission of the frame transmitted from AP 2 403 to STA Y 420 may be stopped in MPDU units. For example, a frame which will be transmitted from AP 2 403 to STA Y 420 may include MPDU #A, MPDU #B, and MPDU #C, and frame transmission may be stopped after MPDU #A and MPDU #B are completely transmitted. That is, MPDU #A and MPDU #B are not lost. Alternatively, transmission of the frame 460 transmitted from AP 2 403 STA Y 420 may be stopped immediately. For example, a frame which will be transmitted from AP 2 403 to STA Y 420 may include MPDU #A, MPDU #B, and MPDU #C, and frame transmission may be stopped while MPDU #A is being transmitted and MPDU #B is being transmitted. In this case, MPDU #A is not lost, but MPDU #B is lost. Stopping transmission may be determined by considering the importance of the MPDU to be transmitted (e.g., priority of AC, delay bound). If the priority of the AC of a frame in which an error is detected in the first link is higher than the priority of the AC of a frame to be transmitted in the second link, transmission may be immediately stopped even if a loss occurs. Alternatively, stopping transmission may be determined by considering the delay bound of the frame to be transmitted. Even if the frame transmitted in the second link is immediately stopped and retransmitted, the transmission may be stopped immediately if the delay bound may be met. AP 2 403 stops frame transmission, and after a certain period of time (e.g., SIFS (short interframe space) or RIFS (reduced interframe space)), AP 2 403 may transmit to STA 2 413 the feedback frame 450 indicating that MPDU #2 430 was not properly received. The feedback frame 450 may be transmitted using OFDMA (Orthogonal Frequency Division Multiple Access). For example, the feedback frame 450 whose recipient is STA 2 413 and the data frame whose recipient is STA Y 420 may be transmitted together using different subchannels using OFDMA. STA Y 420 performs channel sensing and then transmits a response frame to AP 2 403 when transmission of the data frame being received from AP 2 403 has been terminated and the received data frame includes a channel sensing required indicator. If the channel is busy due to the frame transmitted by AP 2 403 (e.g., a feedback frame 450) while performing channel sensing, the response frame is not transmitted after a certain period of time (e.g., SIFS or PIFS).

Since AP 2 403 transmits the feedback frame 450 to STA 2 413 after a certain period of time (e.g., RIFS or SIFS), STA Y 420 does not transmit the response frame to AP 2 403. After transmitting the feedback frame 450 to STA 2 413, AP 2 403 may transmit a data frame to STA Y 420 again, and STA Y 420 transmits the response frame to AP 2 403. STA MLD 1 may receive the feedback frame 450 of AP MLD 1, and STA MLD 1 may know that MPDU #2 430 is not transmitted properly in the frame transmitted from STA 1 411 of the first link to AP 1 401. STA MLD 1 may or may not transmit a response frame (e.g., an ACK frame) to the feedback frame 450 of AP MLD 1. STA MLD 1 may retransmit MPDU #2 430 in a frame that is already being transmitted. For example, MPDU #2 430 may be retransmitted after MPDU #3 440, which is the MPDU after MPDU #2 430. Alternatively, STA MLD 1 may transmit MPDU #2 430 to AP 1 401 through a separate frame. AP MLD 1 may transmit the data in the queue to the upper layer when normally receiving the retransmitted MPDU #2 430. If an error occurs again in the retransmitted MPDU #2 430, the retransmission operation of MPDU #2 430 described above may be performed again. As another method for enabling STA MLD 1 to perform retransmission, STA 1 411 of STA MLD 1 may retransmit the frame transmitted after MPDU #2 430 (e.g., MPDU #3 440) together, instead of retransmitting only MPDU #2 430. That is, STA 1 411 may transmit the frame again starting from MPDU #2 430.

In the above embodiment, when STA MLD 1 has a conditional NSTR link pair or a conditional STR link pair (e.g., when the first link and the second link are a conditional NSTR link pair), while STA MLD 1 is transmitting a frame to AP MLD 1 in the first link, AP MLD 1 transmits a frame to STA MLD 1 with strong transmit power and/or low MCS in the second link. In the conditional NSTR link pair or conditional STR link pair, while the frame is transmitted in one link, STA MLD may receive a frame satisfying a specific condition in another frame. For example, STA MLD may receive a frame satisfying an MCS lower than or equal to a certain value and a receive power higher than or equal to a certain value in the first link in the second link.

The feedback frame 450 of the above embodiment may be a frame in various forms. For example, the feedback frame 450 may be one of a control frame including a BlockAck frame, an action frame, and a QoS frame having a control field (e.g., an HT Control field). The feedback frame 450 includes at least one of a Sequence Number (SN) and TID of the MPDU or/and MSDU or information capable of identifying the MPDU or MSDU (e.g., time information capable of identifying the MPDU or MSDU, and the MPDU identified by the MPDU order within the A-MPDU).

Referring to FIG. 4b, when receiving a frame of STA MLD 1 in the first link, AP MLD 1 may transmit an MU-RTS frame as a first frame of the TXOP of the second link to ensure smooth transmission of the feedback frame 450. The MU-RTS frame may indicate STAs to be communicated with within the TXOP. For example, in the User Info Field included in the MU-RTS frame, AP MLD 1 may indicate AIDs to be communicated with within the TXOP. Referring to FIG. 4b, when the communication target STAs has MLD 1 and MLD X, the AIDs included in the MU-RTS frame indicate STA MLD 1 and STA MLD X. Since one AID is assigned per MLD, the AID of STA MLD X may be the same as the AID of STA Y 420. STA MLD 1 and STA MLD X may receive MU-RTS frames in the second link, and simultaneously transmit CTS frames (e.g., simultaneous CTS frames) after a certain period of time (e.g., SIFS time) after receiving MU-RTS in the second link. AP MLD 1 transmits a data frame to STA Y 420 in the second link after receiving the CTS frame in the second link. AP 2 403 of AP MLD 1 may stop transmission of the frame to STA Y 420 in order to transmit the feedback frame 450 indicating that MPDU #2 430 was not properly received by STA 2 413. The frame 460 transmitted to STA Y 420 may include an indicator (e.g., CS required) indicating that STA Y 420 shall perform channel sensing (CS) before transmitting a response frame (e.g., BlockAck frame) to AP 2 403 and transmit the response frame only when the channel is idle as a result of channel sensing for a certain period of time. The frame 460 transmitted to STA Y 420 may include a Long or Short channel sensing time indicator. The Long or Short channel sensing time indicator may be included only when the channel sensing required indicator is included. The Long channel sensing indicator indicates to perform channel sensing during the PIFS time, and the Short channel sensing indicator indicates to perform channel sensing during the SIFS time. Alternatively, when the channel sensing time indicator is set, it may be interpreted as the Long channel sensing indicator, and when the channel sensing time indicator is not set, it may be interpreted as the Short channel sensing indicator. Alternatively, when the channel sensing required indicator is included, the Long channel sensing indicator, which indicates to perform channel sensing during the PIFS time rather than the SIFS time, may be considered as being included without including the channel sensing time indicator. The channel sensing required indicator (CS required) may be included in an MAC header. When the feedback frame 450 is transmitted after a RIFS time shorter than the SIFS time, the channel sensing time indicator may not be included, and when the channel sensing required indicator is included, the STA that has received it transmits a response frame only when the channel is idle after performing channel sensing during the SIFS time. The transmission of the frame 460 transmitted from AP 2 403 to STA Y 420 may be stopped in MPDU units. For example, the frame which will be transmitted from AP 2 403 to STA Y 420 may include MPDU #A, MPDU #B, and MPDU #C, and the frame transmission may be stopped after MPDU #A and MPDU #B are completely transmitted. That is, MPDU #A and MPDU #B are not lost. Alternatively, the transmission of the frame 460 transmitted from AP 2 403 to STA Y 420 may be stopped immediately. For example, the frame which will be transmitted from AP 2 403 to STA Y 420 may include MPDU #A, MPDU #B, and MPDU #C, and frame transmission may be stopped while MPDU #A is being transmitted and MPDU #B is being transmitted. In this case, MPDU #A is not lost, but MPDU #B is lost. Stopping transmission may be determined by considering the importance of the MPDU to be transmitted (e.g., priority of AC, delay bound). If the priority of the AC of a frame in which an error is detected in the first link is higher than the AC priority of the frame to be transmitted in the second link, transmission may be stopped immediately even if a loss occurs. Alternatively, stopping transmission may be determined by considering the delay bound of the frame to be transmitted. Even if the frame transmitted in the second link is immediately stopped and retransmitted, transmission may be stopped immediately if the delay bound may be met. AP 2 403 stops frame transmission and after a certain period of time (e.g., short interframe space (SIFS) or reduced interframe space (RIFS)), AP 2 403 may transmit to STA 2 413 the feedback frame 450 indicating that MPDU #2 430 was not properly received. The feedback frame 450 may be transmitted using OFDMA (Orthogonal Frequency Division Multiple Access). For example, the feedback frame 450 whose recipient is STA 2 413 and the data frame whose recipient is STA Y 420 may be transmitted together using OFDMA. STA Y 420 performs channel sensing and then transmits a response frame to AP 2 403 when the data frame being received from AP 2 403 has been terminated and the received data frame includes a channel sensing required indicator. If the channel is busy due to a frame transmitted by AP 2 403 (e.g., the feedback frame 450) while performing channel sensing, the response frame is not transmitted after a certain period of time (e.g., SIFS or PIFS). Since AP 2 403 transmits the feedback frame 450 to STA 2 413 after a certain period of time (e.g., RIFS or SIFS), STA Y 420 does not transmit a response frame to AP 2 403. AP 2 403 may transmit the feedback frame 450 to STA 2 413 and then transmit the data frame to STA Y 420, and STA Y 420 transmits the response frame to AP 2 403. STA MLD 1 may receive the feedback frame 450 of AP MLD 1, and STA MLD 1 may know that MPDU #2 430 is not properly transmitted in the frame transmitted from STA 1 411 of the first link to AP 1 401. STA MLD 1 may or may not transmit a response frame (e.g., an ACK frame) in the feedback frame 450 of AP MLD 1. STA MLD 1 may retransmit MPDU #2 430 in the frame that is already being transmitted. For example, MPDU #2 430 may be retransmitted after MPDU #3 440, which is the MPDU after MPDU #2 430. Alternatively, STA MLD 1 may transmit MPDU #2 430 to AP 1 401 through a separate frame. If AP MLD 1 normally receives the retransmitted MPDU #2 430, it may transmit the data in the queue to the upper layer. If an error occurs in the retransmitted MPDU #2 430 again, the retransmission operation of MPDU #2 430 described above may be performed again. As another method for enabling STA MLD 1 to perform retransmission, STA 1 411 of STA MLD 1 may retransmit a frame (e.g., MPDU #3 440) transmitted after MPDU #2 430 instead of retransmitting only MPDU #2 430. That is, STA 1 411 may transmit the frame again starting from MPDU #2 430.

In the above embodiment, when STA MLD 1 has a conditional NSTR link pair or a conditional STR link pair (e.g., when the first link and the second link are a conditional NSTR link pair), while STA MLD 1 is transmitting a frame to AP MLD 1 in the first link, AP MLD 1 transmits a frame to STA MLD 1 with strong transmit power and/or low MCS in the second link. In the conditional NSTR link pair or conditional STR link pair, while the frame is transmitted in one link, the STA MLD may receive a frame that satisfies a specific condition in another link. For example, the STA MLD may receive a frame that satisfies an MCS lower than or equal to a certain value and a receive power higher than or equal to a certain value in the first link in the second link.

The feedback frame 450 of the above embodiment may be a frame in various forms. For example, the feedback frame 450 may be one of a control frame including a BlockAck frame, an action frame, and a QoS frame having a control field (e.g., an HT Control field). The feedback frame 450 includes at least one of a Sequence Number (SN) and TID of the MPDU or/and MSDU or information capable of identifying the MPDU or MSDU (e.g., time information capable of identifying the MPDU or MSDU, and the MPDU identified by the MPDU order within the A-MPDU).

FIG. 5 illustrates a fourth embodiment of a fast error feedback method.

Referring to FIG. 5, AP MLD 1 and STA MLD 1 may operate in a wireless LAN network. The AP in which AP MLD 1 operates in a first link is AP 1 501, and the AP in which AP MLD 1 operates in a second link is AP 2 503. That is, AP 1 501 and AP 2 503 may be affiliated with AP MLD 1. Similarly, the STA in which STA MLD 1 operates in the first link may be STA 1 511, and the STA in which STA MLD 1 operates in the second link may be STA 2 513. That is, STA 1 511 and STA 2 513 may be affiliated with STA MLD 1. In the second link, STA Y 520 affiliated with STA MLD X may operate. X may be a natural number. Y may be a natural number. For example, STA MLD X may or may not be STA MLD 1. STA Y 520 may or may not be STA 2 513. The first link and the second link of STA MLD 1 may be links capable of simultaneous transmit receive (STR link pair). Alternatively, the first link and the second link of STA MLD 1 may be links incapable of simultaneous transmit receive (NSTR link pair), but may be a conditional STR or conditional NSTR link pair that may be received when STA MLD 1 receives a frame transmitted by an AP with strong transmit power or/and low MCS (Modulation and Coding Scheme) in another link while transmitting in one link.

STA 1 511 may acquire a TXOP in the first link. TXOP acquisition is achieved when the EDCAF of STA 1 511 determines transmission by a channel access procedure (e.g., EDCA backoff operation). STA 1 511 may transmit a frame (e.g., a physical layer protocol data unit (PPDU), a MAC layer protocol data unit (MPDU), an aggregated MPDU (A-MPDU)) within the TXOP. STA 1 511 may transmit an A-MPDU to AP 1 501, and the A-MPDU includes a plurality of MPDUs. A delimiter capable of distinguishing MPDUs may be included between the MPDUs. The delimiter may be composed of 32 bits and may include at least one of an MPDU length indicator (e.g., 14 bits), a CRC (Cyclic Redundancy Check) (e.g., 8 bits), and a delimiter signature (e.g., 8 bits). When AP 1 501 receives MPDUs transmitted by STA 1 511, MPDU #1, MPDU #2 530, and MPDU #3 540 may be received sequentially. Among the MPDUs received by AP 1 501, MPDU #2 530 may have an error (e.g., cannot be decoded, FCS error) and may not be properly received. Due to MPDU #2 530 not being properly received, AP 1 501 may not transmit data in the queue to the upper layer. Alternatively, MPDU #2 530 may be a frame that must be urgently transmitted to the upper layer. Because MPDU #2 530 was not properly received, MPDU #2 530 is not transmitted to the upper layer. AP 2 503 did not properly receive MPDU #2 530 and thus cannot know information about MPDU #2 530. For example, AP 2 503 cannot know the TID and SN of MPDU #2 530.

All MPDUs of a frame transmitted from STA 1 511 to AP 1 501 may be MPDUs having the same TID. For example, the TIDs of all MPDUs may be TID A. AP MLD 1 may know that MPDU #2 530 was not received in a frame being received from STA 1 511 in the first link after decoding MPDU #3 540. A feedback frame 550 indicating that MPDU #2 530 was not properly received may be transmitted after receiving MPDU #3 540. Alternatively, the MPDUs of a frame transmitted from STA 1 511 to AP 1 501 may be MPDUs having different TIDs. For example, all MPDUs other than MPDU #2 530 may have TID A, and MPDU #2 530 may have TID B. MPDU #2 530 may be an MPDU that must be transmitted urgently, and may be transmitted among MPDUs with different TIDs. Since MPDU #2 530 has a different TID from other MPDUs, AP MLD 1 may not know that MPDU #2 530 was not received in the frame being received from STA 1 511 in the first link after decoding MPDU #3 540. Alternatively, all MPDUs in the frame transmitted from STA 1 511 to AP 1 501 may have the same TID, but the SN order of the MPDUs may not be transmitted consistently. For example, the SNs of MPDU #1, MPDU #2 530, and MPDU #3 540 may be 1, 3, and 2, respectively. Therefore, if MPDU #2 530 is not received, AP MLD 1 may not know whether MPDU #2 530 should be retransmitted.

STA 1 511 may include at least one of the SN (sequence number), TID information, and whether fast recovery is required of a previous and/or next MPDU in an MAC header or/and A-MPDU delimiter of the frame transmitted to AP 1 501. That is, STA 1 includes information capable of identifying the previous and/or next MPDU in each frame or/and A-MPDU delimiter transmitted to AP 1. In this case, if AP 1 501 correctly received MPDU #1 and did not correctly receive MPDU #2 530, AP 1 501 may immediately know information (e.g., TID, SN) about MPDU #2 530 in which an error occurred. If STA 1 511 indicates that MPDU #2 530 requires fast recovery, AP 1 501 may request retransmission of MPDU #2 530.

To transmit the feedback frame 550 for recovering MPDU #2 530, AP 2 503 may perform a channel access procedure (e.g., an EDCA backoff operation) in the second link. The channel access procedure may be newly started for AP 2 503 to transmit the feedback frame 550 for recovering MPDU #2 530. Alternatively, instead of newly starting the channel access procedure, the channel access procedure previously performed by AP 2 503 may continue to be performed. The channel access procedure of AP 2 503 may succeed (e.g., the EDCA backoff counter reaches 0). AP 2 503 transmits to STA 2 513 the feedback frame 550 indicating that MPDU #2 530 was not properly received. The channel access procedure of AP 2 503 may be performed for each AC (access category). The feedback frame 550 may be transmitted by a channel access procedure of any AC (e.g., by an EDCAF of an AC whose channel access procedure is completed the fastest). Alternatively, if there is an EDCAF of any AC that AP 2 503 successfully performs the channel access procedure (e.g., the EDCA backoff counter reaches 0) and remains at 0, the feedback frame 550 may be transmitted immediately. As another method, the feedback frame 550 may be transmitted by a channel access procedure related to an AC of an MPDU of a frame transmitted from STA 1 511 of the first link transmits to AP 1 501 (e.g., by an AC_VO EDCAF of the second link when the AC of the MPDU transmitted from STA 1 511 to AP 1 501 is AC_VO). For example, the AC-specific channel access procedure of AP 2 503 may terminate AC_VO before AC_VI and other ACs (e.g., AC_BE and AC_BK). AP 2 503 may acquire AC_VO TXOP in the second link, and AP 2 503 may transmit to STA 2 513 the feedback frame 550 indicating that MPDU #2 530 was not properly received. In the remaining AC_VO TXOP of AP 2 503, AP 2 503 may transmit a data frame to STA Y 520.

A frame error in the first link may be detected while a frame to be transmitted is generated in a transmission queue of the second link and a channel access procedure is being performed. A frame of an AC to be transmitted in the second link may be generated and a channel access procedure (e.g., a backoff procedure) may be performed, and an error may be detected in the MPDU received in the first link before the backoff counter becomes 0. The AC of the MPDU in which an error occurred in the first link may be a different AC from or the same AC as the AC for which a backoff is being performed for transmission in the second link. If the channel access procedure in the second link is successful (e.g., if the backoff is successful and the counter becomes 0), a TXOP of a time length including a feedback transmission time for the MPDU generated in the first link is set. That is, a duration included in an MAC header of the feedback frame 550 may be set to a time including the data frame transmission time of the AC to be transmitted. The receiving STA of the feedback frame 550 and the data frame may be different. The feedback frame 550 may be transmitted first and then the data frame may be transmitted. Alternatively, the feedback frame 550 and the data frame may be transmitted together using a downlink OFDMA (Orthogonal Frequency Division Multiple Access) method that simultaneously transmits them using different subchannels. The feedback may be restricted to be transmitted only when the priority of the AC of the data to be transmitted in the second link to perform a channel access procedure is lower than the AC of the MPDU that failed to be transmitted in the first link. Alternatively, the feedback of the MPDU that failed to be transmitted in the first link may be assumed to be higher than any AC. Accordingly, if channel access for data transmission is successful in the second link regardless of the AC, the feedback frame 550 may be transmitted together with the data transmission.

STA MLD 1 may receive the feedback frame 550 of AP MLD 1, and STA MLD 1 may know that MPDU #2 530 is not properly transmitted in the frame transmitted from STA 1 511 of the first link o AP 1 501. STA MLD 1 may or may not transmit a response frame (e.g., an ACK frame) to the feedback frame 550 of AP MLD 1. STA MLD 1 may retransmit MPDU #2 530 in the frame that is already being transmitted. For example, MPDU #2 530 may be retransmitted after MPDU #3 540, which is the MPDU after MPDU #2 530. Alternatively, STA MLD 1 may transmit MPDU #2 530 to AP 1 501 through a separate frame. AP MLD 1 may transmit the data in the queue to the upper layer when normally receiving the retransmitted MPDU #2 530. If an error has occurred in the retransmitted MPDU #2 530 again, the retransmission operation of the above-described MPDU #2 530 may be performed again. As another method for enabling STA MLD 1 to perform retransmission, STA 1 511 of STA MLD 1 may retransmit the frame transmitted after MPDU #2 530 (e.g., MPDU #3 540) together with MPDU #2 530, instead of retransmitting only MPDU #2 530. That is, STA 1 511 may transmit the frame again starting from MPDU #2 530.

In the above embodiment, when STA MLD 1 has a conditional NSTR link pair or a conditional STR link pair (e.g., when the first link and the second link are a conditional NSTR link pair), while STA MLD 1 transmits a frame to AP MLD 1 in the first link, AP MLD 1 transmits a frame to STA MLD 1 with strong transmit power and/or low MCS in the second link. In the conditional NSTR link pair or conditional STR link pair, while the frame is transmitted in one link, the STA MLD may receive a frame satisfying a specific condition in another link. For example, the STA MLD may receive a frame satisfying an MCS lower than or equal to a certain value and a receive power higher than or equal to a certain value in the first link in the second link.

The feedback frame 550 of the above embodiment may be a frame in various forms. For example, the feedback frame 550 may be one of a control frame including a BlockAck frame, an action frame, and a QoS frame having a control field (e.g., an HT Control field). The feedback frame 550 includes at least one of a Sequence Number (SN) and TID of the MPDU or/and MSDU or information capable of identifying the MPDU or MSDU (e.g., time information capable of identifying the MPDU or MSDU, and the MPDU identified by the MPDU order within the A-MPDU).

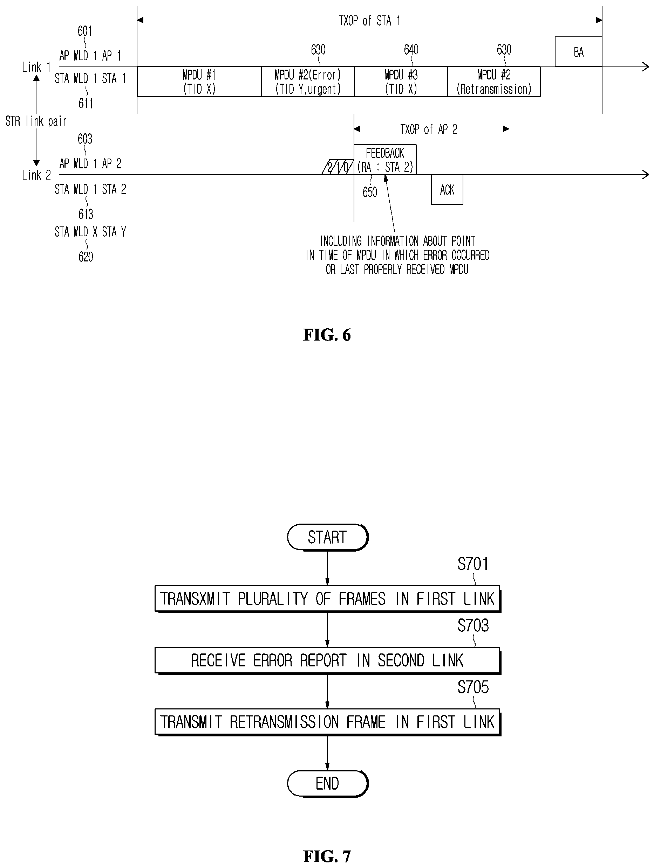

FIG. 6 illustrates a fifth embodiment of a fast error feedback method.

Referring to FIG. 6, AP MLD 1 and STA MLD 1 may operate in a wireless LAN network. An AP in which AP MLD 1 operates in a first link is AP 1 601, and an AP in which AP MLD 1 operates in a second link is AP 2 603. That is, AP 1 601 and AP 2 603 may be affiliated with AP MLD 1. Similarly, an STA in which STA MLD 1 operates in the first link may be STA 1 611, and an STA in which STA MLD 1 operates in the second link may be STA 2 613. That is, STA 1 611 and STA 2 613 may be affiliated with STA MLD 1. In the second link, STA Y affiliated with STA MLD X may operate. X may be a natural number. Y may be a natural number. For example, STA MLD X may or may not be STA MLD 1. STA Y may or may not be STA 2 613. The first link and the second link of STA MLD 1 may be links capable of simultaneous transmit and receive (STR link pair). Alternatively, the first link and the second link of STA MLD 1 may be links incapable of simultaneous transmit and receive (NSTR link pair), but may be a conditional STR or conditional NSTR link pair that may be received when STA MLD 1 receives a frame transmitted by an AP with strong transmit power or/and low MCS (Modulation and Coding Scheme) un another link while transmitting in one link.

STA 1 611 may acquire a TXOP in the first link. TXOP acquisition is achieved when the EDCAF of STA 1 611 determines transmission by a channel access procedure (e.g., EDCA backoff operation). STA 1 611 may transmit a frame (e.g., PPDU (physical layer protocol data unit), MPDU (MAC layer protocol data unit), A-MPDU (aggregated MPDU)) within the TXOP. STA 1 611 may transmit an A-MPDU to AP 1 601, and the A-MPDU includes a plurality of MPDUs. A delimiter capable of distinguishing MPDUs may be included between the MPDUs. A delimiter may be composed of 32 bits and may include at least one of an MPDU length indicator (e.g., 14 bits), a CRC (Cyclic Redundancy Check) (e.g., 8 bits), and a delimiter signature (e.g., 8 bits). When AP 1 601 receives MPDUs transmitted by STA 1 611, MPDU #1, MPDU #2 630, and MPDU #3 640 may be received sequentially. Among the MPDUs received by AP 1 601, MPDU #2 630 may have an error (e.g., cannot be decoded, FCS error) and may not be properly received. Due to MPDU #2 630 not being properly received, AP 1 601 may not transmit data in the queue to the upper layer. Alternatively, MPDU #2 630 may be a frame that must be urgently transmitted to the upper layer. Because MPDU #2 630 was not properly received, MPDU #2 630 is not transmitted to the upper layer. AP 2 603 did not properly receive MPDU #2 630 and thus cannot know information about MPDU #2 630. For example, AP 2 603 cannot know the TID and SN of MPDU #2 630.

All MPDUs of a frame transmitted from STA 1 611 to AP 1 601 may be MPDUs having the same TID. For example, the TIDs of all MPDUs may be TID A. AP MLD 1 may know that MPDU #2 630 was not received in a frame being received from STA 1 611 in the first link after decoding MPDU #3 640. A feedback frame 650 indicating that MPDU #2 630 was not properly received may be transmitted after receiving MPDU #3 640. Alternatively, the MPDUs of a frame transmitted from STA 1 611 to AP 1 601 may be MPDUs having different TIDs. For example, all MPDUs other than MPDU #2 630 may have TID A, and MPDU #2 630 may have TID B. MPDU #2 630 may be an MPDU that must be transmitted urgently, and may be transmitted among MPDUs with different TIDs. Since MPDU #2 630 has a different TID from other MPDUs, AP MLD 1 may not know that MPDU #2 630 was not received in the frame being received from STA 1 611 in the first link after decoding MPDU #3 640. Alternatively, all MPDUs in the frame transmitted from STA 1 611 to AP 1 601 may have the same TID, but the SN order of the MPDUs may not be transmitted consistently. For example, the SNs of MPDU #1, MPDU #2 630, and MPDU #3 640 may be 1, 3, and 2, respectively. Therefore, if MPDU #2 630 is not received, AP MLD 1 may not know whether MPDU #2 630 should be retransmitted.

AP 2 603 may not know the information of MPDU #2 630, but may know when an error occurred. Occurrence of the error may be known when after the delimiter for MPDU #1 or MPDU #2 630 is successfully received, only energy is detected but not decoded, and then the delimiter transmitted before transmitting MPDU #3 640 is received. In order to transmit a feedback frame 650 for recovering MPDU #2 630, AP 2 603 may perform a channel access procedure (e.g., an EDCA backoff operation) in the second link. The channel access procedure may be newly started for AP 2 603 to transmit the feedback frame 650 for recovering MPDU #2 630. Alternatively, instead of newly starting the channel access procedure, the channel access procedure previously performed by AP 2 603 may continue to be performed. The channel access procedure of AP 2 603 may succeed (e.g., the EDCA backoff counter reaches 0). AP 2 603 transmits to STA 2 613 the feedback frame 650 indicating that MPDU #2 630 was not properly received. The channel access procedure of AP 2 603 may be performed for each AC (access category). The feedback frame 650 may be transmitted by the channel access procedure of any AC (e.g., by the EDCAF of the AC whose channel access procedure is completed the fastest). Alternatively, if there is an EDCAF of any type of AC that AP 2 603 successfully performs the channel access procedure (e.g., the EDCA backoff counter reaches 0) and maintains at 0, the feedback frame 650 may be transmitted immediately. As another method, the feedback frame 650 may be transmitted by a channel access procedure related to an AC of an MPDU of the frame transmitted from STA 1 611 of the first link to AP 1 601 (e.g., by AC_VO EDCAF of the second link when the AC of the MPDU transmitted from STA 1 611 to AP 1 601 is AC_VO). For example, the AC-specific channel access procedure of AP 2 603 may terminate AC_VO before AC_VI and other ACs (e.g., AC_BE and AC_BK). AP 2 603 may acquire AC_VO TXOP in the second link, and AP 2 603 transmits to STA 2 613 the feedback frame 650 indicating that MPDU #2 630 was not properly received. In the remaining AC_VO TXOP of AP 2 603, AP 2 603 may transmit data frames to STA Y.

A frame error in the first link may be detected while a frame to be transmitted is generated in a transmission queue of the second link and a channel access procedure is being performed. A frame of an AC to be transmitted in the second link may be generated and a channel access procedure (e.g., a backoff procedure) may be performed, and an error may be detected in an MPDU received in the first link before the backoff counter becomes 0. The AC of the MPDU in which an error occurred in the first link may be a different AC from or the same AC as the AC for which a backoff is being performed for transmission in the second link. If the channel access procedure in the second link is successful (e.g., if the backoff is successful and the counter becomes 0), a TXOP of a time length including a feedback transmission time for the MPDU generated in the first link is set. That is, a duration included in an MAC header of the feedback frame 650 may be set to a time including the data frame transmission time of the AC to be transmitted. The receiving STA of the feedback frame 650 and the data frame may be different. The feedback frame 650 may be transmitted first and then the data frame may be transmitted. Alternatively, the feedback frame 650 and the data frame may be transmitted together using a downlink OFDMA (Orthogonal Frequency Division Multiple Access) method that simultaneously transmits them using different subchannels. The feedback may be restricted to be transmitted only when the priority of the AC of the data to be transmitted in the second link to perform a channel access procedure is lower than the AC of the MPDU that failed to be transmitted in the first link. Alternatively, the feedback of the MPDU that failed to be transmitted in the first link may be assumed to be higher than any AC. Accordingly, if channel access for data transmission is successful in the second link regardless of the AC, the feedback frame 650 may be transmitted together with the data transmission.

Information indicating that MPDU #2 630 was not properly received may be indicated as time information. For example, the time information is information including at least one of 'TSF (time synchronization function) information', 'TSF information and offset', 'time interval using multiple TSF information', or 'frame duration'. When the time information is indicated as 'TSF information', the time information may indicate 'the start or end time of the last properly received MPDU', 'the start or end time of the MPDU in which an error occurred', or 'the time during which the MPDU in which an error occurred was being transmitted'. Alternatively, the time information may be indicated as TSF information capable of identifying that there is an error in MPDU #2 630. The TSF information indicated by AP MLD 1 may be based on the TSF of the first link or the second link. The TSF information indicated by AP MLD 1 may be indicated using some bits (e.g., some LSBs) of the TSF managed by AP MLD 1. When the time information is indicated as 'TSF information and offset' information, the time information may indicate at least one of 'the transmission period of the last properly received MPDU' and 'the transmission period of the MPDU in which an error occurred.' Alternatively, the time information may be indicated as TSF information capable of identifying that there is an error in MPDU #2 630 and an offset. The offset information is time information indicating a time before or after the time indicated by the TSF information. For example, the offset information may be indicated in TU units (1 TU = 1024 us) or may be indicated using some LSBs of the TSF. Alternatively, the offset information may indicate a time length in a manner identical to or similar to a duration field included in an MAC header of the MPDU. The TSF information indicated by AP MLD 1 may be based on the TSF of the first link or the second link. When the time information is indicated as 'a time interval using multiple TSF information,' the time information may indicate at least one of 'the transmission period of the last properly received MPDU' or 'the transmission period of the MPDU in which an error occurred.' Alternatively, the time information may be indicated by multiple TSF information capable of identifying that there is an error in MPDU #2 630. The multiple TSF information indicated by AP MLD 1 may be based on the TSF of the first link or the second link. Some or all of the multiple TSF information indicated by AP MLD 1 may be indicated using some bits (e.g., some LSBs) of the TSF managed by AP MLD 1. When the time information is indicated as 'frame duration', the time information may indicate at least one of 'transmission length of the last properly received MPDU' or 'transmission length of the MPDU in which an error occurred'. Alternatively, the time information may be indicated by duration information capable of identifying that there is an error in MPDU #2 630. The duration of the frame may indicate the time length in a manner identical to or similar to the duration field included in the MAC header of the MPDU. STA MLD 1 must record time information (e.g., TSF information when transmitting each MPDU, duration information of each MPDU) during transmission of each MPDU to properly recover from corrupted MPDUs (e.g., MPDU #2 630). AP MLD 1 must record time information (e.g., TSF information when receiving each MPDU, duration information of each MPDU) during reception of each MPDU to properly recover from corrupted MPDUs (e.g., MPDU #2 630).

STA MLD 1 may receive the feedback frame 650 of AP MLD 1, and STA MLD 1 may identify that MPDU #2 630 was not properly transmitted using the time information of the feedback frame 650 of AP MLD 1. STA MLD 1 may or may not transmit a response frame (e.g., an ACK frame) in the feedback frame 650 of AP MLD 1. STA MLD 1 may retransmit MPDU #2 630, which is an MPDU in which an error occurred, in a frame that is already being transmitted. For example, MPDU #2 630 may be retransmitted after MPDU #3 640, which is the MPDU after MPDU #2 630. Alternatively, STA MLD 1 may transmit MPDU #2 630 to AP 1 601 through a separate frame. If AP MLD 1 receives retransmitted MPDU #2 630 without error, it may transmit the data in the queue to the upper layer. If an error occurs in the retransmitted MPDU #2 630 again, the retransmission operation of MPDU #2 630 described above may be performed again. As another method for enabling STA MLD 1 to perform retransmission, STA 1 611 of STA MLD 1 may retransmit a frame transmitted after MPDU #2 630 (e.g., MPDU #3 640) instead of retransmitting only MPDU #2 630. That is, STA 1 611 may transmit a frame again starting from MPDU #2 630.

In the above embodiment, when STA MLD 1 has a conditional NSTR link pair or a conditional STR link pair (e.g., when the first link and the second link are a conditional NSTR link pair), while STA MLD 1 transmits a frame to AP MLD 1 in the first link, AP MLD 1 transmits a frame to STA MLD 1 with strong transmit power and/or low MCS in the second link. In the conditional NSTR link pair or conditional STR link pair, while the frame is transmitted in one link, STA MLD may receive a frame satisfying a specific condition in another link. For example, STA MLD may receive a frame satisfying an MCS lower than or equal to a certain value and a receive power higher than or equal to a certain value in the first link in the second link.

The feedback frame 650 of the above embodiment may be a frame in various forms. For example, the feedback frame 650 may be one of a control frame including a BlockAck frame, an action frame, and a QoS frame having a control field (e.g., an HT Control field). The feedback frame 650 includes at least one of a Sequence Number (SN) and TID of the MPDU or/and MSDU or information capable of identifying the MPDU or MSDU (e.g., time information capable of identifying the MPDU or MSDU, and the MPDU identified by the MPDU order within the A-MPDU).

Hereinafter, a procedure for detecting the occurrence of a transmission error will be described. The described procedure is performed by a first STA and an AP. The first STA and the AP may be connected using a first link and a second link. The first link and the second link may be a STR link pair. The AP may be connected to a second STA using the second link. That is, the first STA, the second STA, and the AP may be multi-link devices (MLDs).

FIG. 7 illustrates a flowchart of an error recovery procedure according to an embodiment of the present disclosure. FIG. 7 illustrates a procedure performed by a first STA. The first STA (e.g., STA MLD 1 of FIG. 3) is connected to an AP (e.g., AP MLD 1 of FIG. 3) using a first link and a second link.

Referring to FIG. 7, in step S701, the first STA transmits a plurality of frames (e.g., MPDU #2 330 and MPDU #3 340 of FIG. 3) in the first link. The plurality of frames may include at least one MPDU. Each frame may include a delimiter for distinguishing frames. The delimiter may include at least one of an MPDU length indicator, a CRC, or a delimiter signature. For example, the delimiter may have a size of 32 bits. In addition, the delimiter includes at least one of an MPDU including the delimiter or an SN (sequence number) of an MPDU to be transmitted next, TID information, or whether fast recovery is required, in order for a recipient to detect an error.

In step S703, the first STA receives an error report in the second link. The error report includes a message transmitted from the AP when an error is detected among the frames transmitted in step S701. The error report may include information for reporting an error and requesting retransmission. The error report may be included in a feedback frame (e.g., feedback frame 350 of FIG. 3). The error report may include information about the error. The information about the error may be information directly indicating the frame in which the error was detected. Alternatively, the information about the error may be information indirectly indicating the frame in which the error was detected. The indirectly indicating information may include time information. The time information includes at least one of time synchronization function (TSF) information, TSF information and an offset, a time interval using multiple TSF information, or a duration of the frame. The first STA may recognize that an error has occurred in frame transmission based on the information about the error. For example, the first STA may recognize a frame in which an error is detected by recognizing the transmission time, transmission time interval, or transmission time length of the frame in which the error is detected based on the time information.

In step S705, the first STA transmits a retransmission frame (e.g., MPDU #2 330 of FIG. 3) in the first link. Here, the retransmission frame may include the frame in which the error is detected. For example, the retransmission frame may include at least one of the frame in which the error is detected or a frame transmitted after the frame in which the error is detected (e.g., MPDU #3 340 of FIG. 3). The retransmission frame may be retransmitted after transmission of the frame being transmitted in the first link is completed. Alternatively, the retransmission frame may be retransmitted after transmission of the frame being transmitted in the first link is stopped.

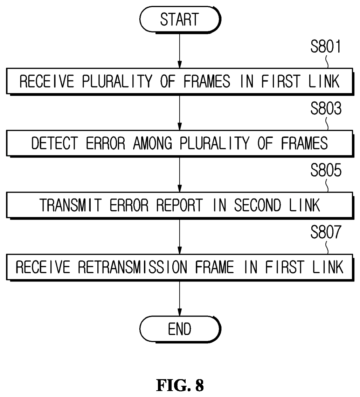

FIG. 8 illustrates a flowchart of an error recovery procedure according to an embodiment of the present disclosure. FIG. 8 illustrates a procedure performed by an AP. An AP (e.g., AP MLD 1 of FIG. 3) is connected to at least one of a first STA (e.g., STA MLD 1 of FIG. 3) or a second STA (e.g., STA MLD X of FIG. 3) using a first link and a second link.

Referring to FIG. 8, in step S801, the AP receives a plurality of frames (e.g., MPDU #2 330 and MPDU #3 340 of FIG. 3) in the first link. The plurality of frames may be frames for transmitting data. The plurality of frames may include an MPDU. The plurality of frames may be frames having the same TID. Alternatively, the plurality of frames may be frames having different TIDs. Each frame may include a delimiter. The delimiter may include at least one of an MPDU length indicator, a CRC, or a delimiter signature. For example, the delimiter may have a size of 32 bits. In addition, the delimiter includes at least one of an MPDU including the delimiter or an SN (sequence number) of an MPDU to be transmitted next, TID information, or whether fast recovery is required, in order for a recipient to detect an error.

In step S803, the AP detects an error among the plurality of frames. At least one of the frames may be undecodable, or an FCS error, etc. may occur in at least one frame. If the TIDs of the frames are the same, the AP may detect an error in one of the frames based on the SN. If the TIDs of the frames are not the same, or if the TIDs are the same but the frames are not transmitted in the SN order, the AP may know a point in time when the error occurs based on the delimiter. For example, after the AP receives a frame including the delimiter, if energy is detected but cannot be decoded, it is possible to detect an error in the frame transmission.

In step S805, the AP transmits an error report in the second link. The error report is transmitted to the first STA. The error report may be included in a feedback frame (e.g., feedback frame 350 of FIG. 3). To transmit the error report, the AP may stop transmission of a frame being transmitted to the second STA in the second link. Alternatively, the AP may transmit the error report after transmission of the frame being transmitted is completed. The error report may include information about the error. The information about the error may be information directly indicating the frame in which the error is detected. Alternatively, the information about the error may be information indirectly indicating the frame in which the error is detected. The indirectly indicating information may include time information. The time information includes at least one of time synchronization function (TSF) information, TSF information and an offset, a time interval using multiple TSF information, or a duration of the frame.

In step S807, the AP receives a retransmission frame (e.g., MPDU #2 330 of FIG. 3) in the first link. The retransmission frame may include the frame in which the error is detected. For example, the retransmission frame may include at least one of the frame in which the error is detected or a frame transmitted after the frame in which the error is detected (e.g., MPDU #3 340 of FIG. 3). The retransmission frame may be retransmitted after transmission of a frame being transmitted in the first link is completed. Alternatively, the retransmission frame may be retransmitted after transmission of the frame being transmitted in the first link is stopped.

The first STA or AP acquires a TXOP in order to transmit a frame. To acquire the TXOP, the first STA or AP performs a channel access procedure. The channel access procedure may be performed for each AC. The frames transmitted by the first STA and the error report transmitted by the AP may be transmitted based on the same AC. Alternatively, the frames transmitted by the first STA and the error report transmitted by the AP may be transmitted based on different ACs. The AP may stop a frame being transmitted to the second STA based on the AC of the frame in which the error is detected, or transmit the error report after the transmission of the frame being transmitted is completed. Alternatively, the frame in which the error is detected or the error report may be transmitted with a higher priority than the AC.

## Claims

1. A method for operating a station (STA) in a wireless LAN system, the method comprising:
transmitting a plurality of frames in a first link;
receiving an error report of a frame in which an error is detected among the plurality of frames in a second link; and
transmitting a retransmission frame including the frame in which the error is detected based on the error report,
wherein each of the plurality of frames includes a delimiter, and
wherein the delimiter includes information for distinguishing each of the plurality of frames.

2. The method of claim 1, wherein the error report includes information directly indicating the frame in which the error is detected or information indirectly indicating the frame in which the error is detected.

3. The method of claim 2, wherein the indirectly indicating information includes at least one of TSF information, an offset of TSF information, a time interval based on multiple TSFs, or a duration of a frame.

4. The method of claim 2, wherein the directly indicating information includes at least one of a TID of the frame in which the error is detected, a sequence number (SN), or time information capable of identifying the frame in which the error is detected.

5. The method of claim 1, wherein the retransmission frame includes at least one of the frame in which the error is detected or a frame transmitted after the frame in which the error is detected.

6. The method of claim 1, wherein information for distinguishing each of the frames includes at least one of a traffic identifier (TID) of each of the plurality of frames, a sequence number (SN), or information indicating whether fast recovery is required.

7. The method of claim 1, wherein the plurality of frames includes frames having the same TID.

8. A method for operating an access point (AP) in a wireless LAN system, the method comprising:
receiving a plurality of frames in a first link;
detecting an error in at least one of the plurality of frames;
transmitting an error report based on the frame in which the error is detected; and
receiving a retransmission frame transmitted based on the error report,
wherein each of the plurality of frames includes a delimiter, and
wherein the delimiter includes information for distinguishing each of the plurality of frames.

9. The method of claim 8, wherein the error report includes information directly indicating the frame in which the error is detected or information indirectly indicating the frame in which the error is detected.

10. The method of claim 9, wherein the indirectly indicating information includes at least one of TSF information, an offset of TSF information, a time interval based on multiple TSFs, or a duration of a frame.

11. The method of claim 9, wherein the directly indicating information includes at least one of a TID of the frame in which the error is detected, a sequence number (SN), or time information capable of identifying the frame in which the error is detected.

12. The method of claim 8, wherein information for distinguishing each of the frames includes at least one of a traffic identifier (TID) of each of the plurality of frames, a sequence number (SN), or information indicating whether fast recovery is required.

13. The method of claim 12, wherein the detecting the error further comprises detecting the error based on the TID or the SN included in the delimiter.

14. The method of claim 8, wherein the retransmission frame includes at least one of the frame in which the error is detected or a frame transmitted after the frame in which the error is detected.

15. The method of claim 8, wherein the detecting the error further comprises detecting the error based on a time interval until reception of a next delimiter after receiving the frame including the delimiter.

16. The method of claim 8, wherein the transmitting the error report comprises:
determining whether to stop transmission of a frame being transmitted in the second link based on an access category (AC) of the frame in which the error is detected; and
transmitting the error report based on whether the transmission is stopped.

17. A station (STA) in a wireless LAN system, comprising:
a transceiver; and
a processor connected to the transceiver,
wherein the processor is configured to:
transmit a plurality of frames in a first link;
receive an error report of a frame in which an error is detected among the plurality of frames in a second link; and
transmit a retransmission frame including the frame in which the error is detected based on the error report,
wherein each of the plurality of frames includes a delimiter, and
wherein the delimiter includes information for distinguishing each of the plurality of frames.

18. An access point (AP) in a wireless LAN system, comprising:
a transceiver; and
a processor connected to the transceiver,
wherein the processor is configured to:
receive a plurality of frames in a first link;
detect an error in at least one of the plurality of frames;
transmit an error report based on the frame in which the error is detected; and
receive a retransmission frame transmitted based on the error report,
wherein each of the plurality of frames includes a delimiter, and
wherein the delimiter includes information for distinguishing each of the plurality of frames.
